# EUROPÄISCHE PATENTSCHRIFT

(11) **EP 3 145 681 B1**
(45) Veröffentlichungstag und Bekanntmachung des Hinweises auf die Patenterteilung: **24.02.2021**
(21) Anmeldenummer: 15722447.8
(22) Anmeldetag: 09.05.2015
(51) Int. Cl.: B25J 9/16

(54) **VERFAHREN ZUR VERMEIDUNG VON KOLLISIONEN EINES ROBOTERS IN EINER ARBEITSSTATION**
METHOD FOR PREVENTING COLLISIONS OF A ROBOT IN A WORKSTATION
PROCÉDÉ PERMETTANT D'ÉVITER À UN ROBOT DE SUBIR DES COLLISIONS DANS UNE STATION DE TRAVAIL

(30) Priorität: 23.05.2014 DE 102014007624
(43) Veröffentlichungstag der Anmeldung: 29.03.2017
(73) Patentinhaber: Daimler AG, 70372 Stuttgart (DE)
(72) Erfinder: FELDMANN, Anton, 71063 Sindelfingen (DE); GÜRTLER, Alexander, 74354 Besigheim (DE); KLUMPP, Simon, 73765 Neuhausen (DE); KLUMPP, Willi, 73760 Ostfildern (DE); REICHENBACH, Matthias, 70195 Stuttgart (DE); SCHREIBER, Matthias, 74321 Bietigheim-Bissingen (DE); ZÜRN, Michael, 71065 Sindelfingen (DE)
(74) Vertreter: JENSEN & SON
(86) Internationale Anmeldenummer: PCT/EP2015/000964
(87) Internationale Veröffentlichungsnummer: WO 2015/176802

(56) Entgegenhaltungen:
- EP-A2- 2 000 872
- DE-A1- 10 320 343
- DE-A1-102007 037 077
- US-B1- 8 700 307

## Beschreibung

Die Erfindung betrifft ein Verfahren zum Ermitteln von die Bewegung eines Roboters beeinflussenden Größen, insbesondere ein Verfahren zur Planung und Bewertung von Produktionsanlagen, welche im Sinne einer Mensch-Roboter-Kooperation betrieben werden.

Wenn Menschen und Roboter eng zusammenarbeiten sollen, ist es wichtig, zu jedem Zeitpunkt die Gefährdung für den Menschen zu kennen, die vom Roboter ausgeht.

Es existieren schon Konzepte, bei denen bereits vorhandene Anlagen auf die Gefährdung für den Menschen hin untersucht werden können, wie beispielsweise aus der DE 10 2013 212 887 A1 bekannte Rechenmodelle oder Kollisionsmessungen in der Produktionsanlage. Dabei werden etwaige Kollisionsstellen von Mensch und Roboter identifiziert und auf ihre Gefährdung bezüglich vorgegebenen Normen (beispielsweise ISO10218-1, ISO10218-2, TS 15066, BG/BGIA Empfehlung für die Gefährdungsbeurteilung nach Maschinenrichtlinie -Gestaltung von Arbeitsplätzen mit kollaborierenden Robotern- U001/2009) hin beurteilt. Ist die Gefährdung zu hoch, werden die Bewegung bzw. die Bahn und/oder die Geschwindigkeit des Roboters entsprechend angepasst. Dies wird iterativ durchgeführt, bis alle Gefährdungen eliminiert sind. Verfahren dieser Art sind zum einen sehr aufwendig und erfordern zum anderen immer eine bereits physikalische vorhandene Anlage. Weiterhin funktionieren diese Verfahren nur dann, wenn eine genaue Kenntnis des Roboterdynamik-Modells vorliegt, was in der Praxis oft nicht der Fall ist. Des Weiteren müssen bei diesen Verfahren bei jeder Änderungen in der Hardware oder Software die Rechnermodelle neu aufgesetzt werden und erneut validiert werden.

Da das Kollisionsverhalten bei diesen Verfahren nicht exakt berechnet werden kann, müssen die Bewegungen evtl. stark verlangsamt durchgeführt werden, was zu verringerten Taktzeiten führen kann. Weiterhin ist die Reproduzierbarkeit bei Messungen in der realen Anlage schwer nachbildbar. Ebenfalls kann derzeit nicht an jedem Punkt in einer Anlage gemessen werden, da für die Messung verwendete Messsysteme von aufgrund von Störkonturen nicht an jede Stelle in der Anlage gebracht werden können.

Die DE 103 20 343 A1 beschreibt ein Verfahren zum Überwachen einer Kooperation zwischen einem Roboter und einem Menschen. Sobald der Roboter sich während der Kooperation dem Menschen annähert, wird diesem ein Bewegungsmuster aufgeprägt, das dem Menschen ein Gefühl von Arbeitssicherheit und Kontrolle über den Roboter vermittelt. Das Bewegungsmuster wird dabei an den jeweiligen Menschentypus angepasst, der gerade mit dem Roboter zusammenarbeitet.

Die DE 10 2007 037 077 A1 beschreibt ein Verfahren zur Einhaltung von Arbeitsraumgrenzen eines Arbeitsmittels eines Roboters während der Bewegung des Roboters in einem Arbeitsraum.

Die EP 2 000 872 A2 beschreibt ein Verfahren zum Programmieren eines Industrieroboters. Der Industrieroboter wird manuell entlang einer Raumkurve bewegt, die entlang einer Oberfläche eines Objekts verläuft. Die Bewegung des Roboters wird automatisch korrigiert, sodass ein Abstand zwischen dem Industrieroboter und der Oberfläche stets einem Mindestabstand entspricht.

Es ist daher die Aufgabe der vorliegenden Erfindung, eine geschlossene Vorgehensweise bereitzustellen, mittels welcher die Gefährdung eines Menschen schon im Planungsstadium beurteilt werden kann, um entsprechende Änderungen schon in diesem Stadium vornehmen zu können.

Diese Aufgabe wird durch ein Verfahren zum Ermitteln von die Bewegung eines Roboters beeinflussenden Größen mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Das erfindungsgemäße Verfahren zum Ermitteln von die Bewegung eines Roboters beeinflussenden Größen umfasst die folgenden Schritte:
a) Bereitstellen einer vom Roboter und einem Arbeiter durchzuführen Arbeitsaufgabe;
b) Bereitstellen eines Layouts einer Arbeitsstation, in welcher die Arbeitsaufgabe durchzuführen ist;
c) Bereitstellen von Werkzeugdaten, welche ein bei der Durchführung der Arbeitsaufgabe durch den Roboter zu verwendendes Werkzeug charakterisieren;
d) Ermitteln jeweiliger Achsbewegungsverläufe des Roboters, welche zum Durchführen der Arbeitsaufgabe erforderlich sind, unter Berücksichtigung der in den vorhergehenden Schritten bereitgestellten Informationen;
e) Bereitstellen eines Arbeitsraums des Arbeiters;
f) Ermitteln relevanter, kritischer Bahnpunkte des Roboters innerhalb des Arbeitsraums des Arbeiters, an welchen eine vorbestimmte Bewegungsgeschwindigkeit durch den Roboter überschritten und/oder eine vorbestimmte Masse eines mittels des Roboters zu bewegenden Elements überschritten wird, unter Berücksichtigung der Achsbewegungsverläufe und des Arbeitsraums;
g) Nachbilden jeweiliger Kollisionen mittels eines zweiten Roboters an den Bahnpunkten, indem eine Ermittlung der im Betrieb real auftretenden Kollisionskräfte und Flächenpressungen mit Hilfe eines Versuchsaufbaus bestehend aus dem zweiten Roboter, der einen starren Stoß in jeder beliebigen Position des Arbeitsraums nachbildet, durchgeführt wird;
h) Bestimmen zulässiger Verfahrgeschwindigkeiten des Roboters für jeden kritischen Bahnpunkt unter Berücksichtigung der nachgebildeten Kollisionen.

Die vorstehend genannte Aufgabe wird also erfindungsgemäß dadurch gelöst, dass eine Ermittlung der im Betrieb real auftretenden Kollisionskräfte und Flächenpressungen mit Hilfe eines Versuchsaufbaus bestehend aus einem Industrieroboter, der einen starren Stoß in jeder beliebigen Position des Arbeitsraums nachbildet, durchgeführt wird. Auf diese Weise kann für jeden Punkt der Robotertrajektorie im Planungsstadium bereits die maximale Verfahrgeschwindigkeit ermittelt werden. Im Gegensatz zu dem eingangs genannten und bereits bekannten Vorgehen kann also eine Bewertung unter Berücksichtigung aller aus der Roboterbewegung resultierenden Effekte durchgeführt werden.

Diese Effekte sind vor allem Geschwindigkeiten, Massen, Geometrien, Abstände, Erreichbarkeit durch Körperteile, die verwendete Reglerstrategie der Bewegung, verwendete Schutzelemente sowie Materialeigenschaften.

Dieses Vorgehen ist essentiell, um wissen zu können, ob eine Anlage aktuelle BG-Empfehlungen und Normenlage erfüllt, das heißt, ob keine Gefährdung nach ISO 10218-2 vorliegt. Durch das erfindungsgemäße Verfahren kann eine Anlage, welche im Sinne einer Mensch-Roboter-Kooperation betrieben werden soll, besonders sinnvoll geplant werden. Insbesondere ist es mittels des erfindungsgemäßen Verfahrens möglich, bereits vor Erstellung der eigentlichen Anlage eventuelle Gefährdungen durch den Roboter zu bewerten.

Eine vorteilhafte Ausführung der Erfindung sieht vor, dass unter Berücksichtigung der Werkzeugdaten ein Hüllraum festgelegt wird, welcher das gesamte Werkzeug umgibt. Mit anderen Worten kann also eine Art Greiferhülle vorgesehen werden, die schon die Geometrie des betreffenden Werkzeugs für mögliche Kollisionen berücksichtigt. Dieser Hüllraum ist schnell und preiswert, beispielsweise durch ein Rapid-Prototyping-Verfahren, herstellbar.

In weiterer vorteilhafter Ausgestaltung der Erfindung ist es vorgesehen, dass die Achsbewegungsverläufe mittels einer Simulation oder einer Messung ermittelt werden. Im Falle einer Simulation besteht der Vorteil darin, dass der betreffende Roboter gar nicht verfahren werden muss. Der Vorteil einer Messung liegt darin, dass gegebenenfalls exaktere Achsbewegungsverläufe als bei einer Simulation ermittelt werden könnten.

Die Simulation kann beispielsweise mit einem sogenannten Office-PC oder einem RCS-Modul oder einer anderen bahntreuen Simulationsmöglichkeit durchgeführt werden. Besonders erforderlich ist dieses Vorgehen, falls der Prozess in einer Angebots- oder Planungsphase Anwendung finden muss.

Gemäß einer weiteren vorteilhaften Ausführungsform der Erfindung ist es vorgesehen, dass unter Berücksichtigung der Achsbewegungsverläufe mögliche Quetsch- oder Klemmstellen, insbesondere innerhalb des Arbeitsraums des Arbeiters, ermittelt werden, bei welchen jeweilige Mindestabstände zwischen Produktionsanlage und Roboter, wie in der DIN EN 349 normiert, unterschritten werden. Dadurch können bereits frühzeitig eventuelle Gefährdungen des Arbeiters bei der Durchführung des vorgegebenen Arbeitsauftrags ermittelt werden.

Damit kann abgebildet werden, in welchen Zuständen des Roboters ein Klemmen / Quetschen für jeweils relevante Körperteile und in welchen Zuständen Stöße für relevante Körperteile abgesichert werden müssen.

Eine weitere vorteilhafte Ausführungsform der Erfindung sieht vor, dass ein zeitlicher Verlauf der reflektierten Massen des Roboters bestimmt wird. Eine reflektierte Masse oder auch sogenannte Lastmasse ist die wahrgenommene Masse einer Baugruppe an einer Motorantriebswelle eines Antriebsmotors; im vorliegenden Fall also die jeweilige an den Achsen des Roboters wahrgenommene Masse. Dadurch kann bereits relativ zuverlässig ermittelt werden, welche tatsächlichen Massen auf den Roboter oder Menschen einwirken werden.

In die Massenberechnung fließen sowohl die Massen- / Trägheitseigenschaften des Roboters und seiner Glieder ein als auch die Werkzeug- / Werkstückeigenschaften.

In weiterer vorteilhafter Ausgestaltung der Erfindung ist es vorgesehen, dass die mittels des zweiten Roboters nachgebildeten Kollisionen mittels eines Pendels und einer Kraftmessdose mit unterschiedlichen Verfahrgeschwindigkeiten iterativ wiederholt werden, bis entsprechende Kollisionskräfte und Kollisionsdrücke sowie Flächenpressungen an den kritischen Bahnpunkte jeweilige Schwellwerte unterschreiten. Dadurch können auf besonders zuverlässige Weise biomechanische Belastungsgrenzen, welche beispielsweise durch entsprechende Normen vorgegeben sind, ermittelt werden. Mit anderen Worten können also sogenannte biofidele Belastungsgrenzen überwacht und die entsprechenden Verfahrgeschwindigkeiten des Roboters solang iterativ angepasst werden, bis entsprechend vorgegebene Schwellenwerte nicht mehr überschritten werden. Eine weitere vorteilhafte Ausführungsform der Erfindung sieht vor, dass als kraft- oder druckmessende Einrichtung ein biofideler Prüfkörper nach BG/BGIA-Empfehlung verwendet wird. Somit kann bereits im Stoß der Roboter zueinander die Biomechanik mit abgebildet werden.

Ebenfalls könnte die Messung von Kraft und Flächenpressung auf eine prozessstabile Messanordnung erfolgen und durch Umrechnen des aufgezeichneten Kraftverlauf auf einen Verlauf, der auf ein beliebiges Feder-Dämpfer-Modell entstanden wäre. Vorteilhaft wäre die Umrechnung auf die Feder-Dämpfer-Modelle wie in der Normung für die verschiedenen Körperteile angegeben werden.

Schließlich ist es in weiterer vorteilhafter Ausgestaltung der Erfindung vorgesehen, dass beim Ermitteln der jeweiligen Kollisionen der zweite Roboter derart eingestellt wird, dass dieser entsprechende Stoßrichtungen und Widerstände für die kritischen Bahnpunkte nachbildet. Dadurch können im Wesentlichen beliebige Stoßfälle ohne eine Hardwareänderung besonders exakt, reproduzierbar und belegbar nachgebildet werden.

Zudem können Stöße und Klemmung auch in Wirkrichtung relevanter Geometrien am Werkzeug erfolgen, da auch in dieser Richtung die biomechanischen Belastungsgrenzen überschritten werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht eines Layouts einer Arbeitsstation, in welcher eine vorgegebene Arbeitsaufgabe durch einen Leichtbauroboter und einen in der vorliegenden Fig. nicht dargestellten Arbeiter gemeinsam durchgeführt wird;
- Fig. 2: eine Perspektivansicht eines Werkzeugs, welches der in Fig. 1 gezeigte Leichtbauroboter zur Durchführung der vorgegebenen Arbeitsaufgabe verwendet;
- Fig. 3: eine weitere Perspektivansicht der Arbeitsstation, wobei der Arbeiter, welcher gemeinsam mit dem Leichtbauroboter die vorgegebene Arbeitsaufgabe durchführen soll, und ein Arbeitsraum des Arbeiters dargestellt ist;
- Fig. 4: eine Darstellung eines Industrieroboters, welcher mit dem in den vorherigen Abbildungen gezeigten Leichtbauroboter gekoppelt ist, wodurch unterschiedliche Stoßfälle nachgebildet werden;
- Fig. 5: ein Pendel mit einer Messdose, mittels welchem Kollisionen zwischen dem Arbeiter und dem Roboter nachbildbar sind; und in
- Fig. 6: eine schematische Darstellung von unterschiedlichen Kraft-Zeit-Verläufen, welche sich bei der Nachbildung von Kollisionen mittels des Industrieroboters und des Pendels ergeben.

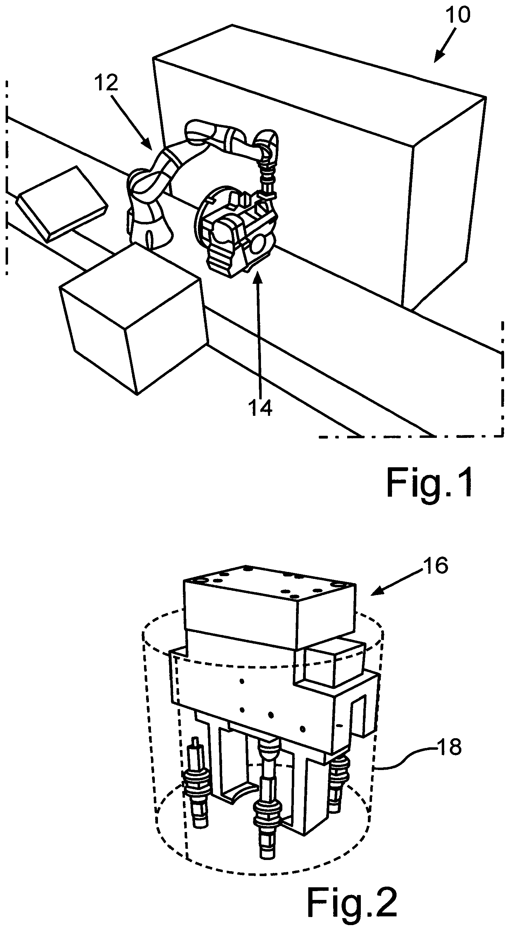

Ein Layout einer Arbeitsstation 10 ist in einer Perspektivansicht in Fig. 1 gezeigt. Das Layout der Arbeitsstation 10 kann beispielsweise als ein CAD-Modell für eine noch zu planende Station und ihrer Umgebung bereitgestellt werden. Innerhalb der Arbeitsstation 10 ist ein Leichtbauroboter 12 angeordnet, welcher eine vorgegebene Arbeitsaufgabe an einem Werkstück 14 vornimmt.

Die Arbeitsstation dient als sogenannte MRK-Anlage, wobei diese Abkürzung für Mensch-Roboter-Kooperation steht. Das heißt, dass in der hier gezeigten Anlage 10 ein hier nicht dargestellter Arbeiter und der Leichtbauroboter 12 gemeinsam eine vorgegebene Arbeitsaufgabe an dem hier gezeigten Werkstück 14, durchführen.

In Fig. 2 ist in einer Perspektivansicht ein Werkzeug 16 gezeigt, welches der Leichtbauroboter 12 zur Durchführung der besagten Arbeitsaufgabe verwenden wird. Um das Werkzeug 16 herum ist ein Hüllraum 18 festgelegt, welcher das Werkzeug 16 umgibt. Ein nicht näher bezeichneter Greifer weist beispielsweise eine Masse von rund 1,2 Kilogramm auf, wobei die Masse des Werkstücks 14 ca. 10 Kilogramm aufweist. Durch den Hüllraum 18 wird eine Art Greiferhülle vorgesehen, die schon entsprechende Geometrien für mögliche Kollisionen berücksichtigt.

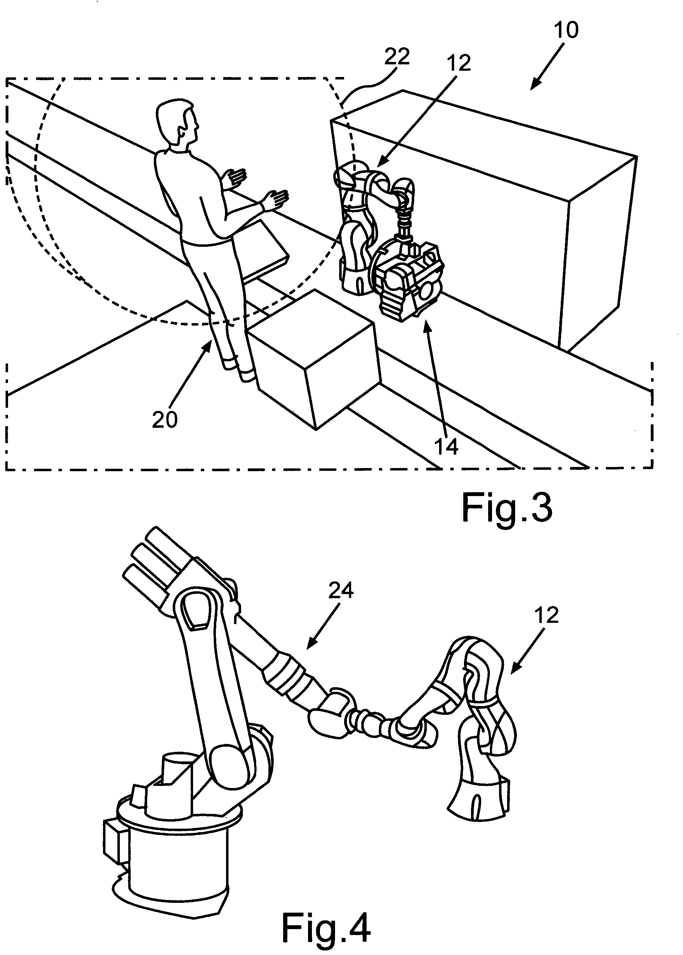

In Fig. 3 ist in einer weiteren Perspektivansicht wiederum das Layout der Arbeitsstation 10 dargestellt, wobei vorliegend nun der Arbeiter 20, der gemeinsam mit dem Leichtbauroboter 12 eine entsprechend vorgegebene Arbeitsaufgabe an dem Werkstück 14 durchführen soll, dargestellt ist. Des Weiteren ist um den Arbeiter 20 herum ein Arbeitsraum 22 des Arbeiters 20 dargestellt. Dieser bildet den Arbeitsraum eines 95-Perzentil-Menschen ab.

Insoweit ist also die von dem Leichtbauroboter 12 und dem Arbeiter 20 durchzuführende Arbeitsaufgabe sowie das Layout der Arbeitsstation 10 bereitgestellt worden, in welcher die Arbeitsaufgabe durchzuführen ist. Ferner sind, wie in Fig. 2 gezeigt, entsprechende Werkzeugdaten - wie beispielsweise Masse, Geometrie und dergleichen - für das Werkzeug 16 bereitgestellt, welches der Leichtbauroboter 12 zur Durchführung der Arbeitsaufgabe verwenden wird. Sollten diese Daten nicht verfügbar sein, werden durch Abstraktion abgeschätzte Konturen sowie Lastdaten (Massen und Schwerpunkte) verwendet.

Unter Berücksichtigung dieser Informationen können jeweilige Achsbewegungsverläufe des Leichtbauroboters 12 ermittelt werden, welche zum Durchführen der Arbeitsaufgabe erforderlich sind. Dies kann beispielsweise durch eine reine Simulation oder auch durch eine entsprechende Messung durchgeführt werden. Somit können alle notwendigen Roboterstellungen zur Durchführung der Arbeitsaufgabe bereits vorab ermittelt werden. Die so gewonnenen Achsbewegungsverläufe können beispielsweise exportiert werden, wodurch entsprechend angefahrene Punkte und unterschiedliche Achsstellungen des Leichtbauroboters 12 bereitgestellt werden können. Die anzufahrenden Positionen und entsprechende Werkzeugdaten können in einer Robotersteuerungs-Schnittstelle umgeschrieben werden, wonach ein betreffendes Programm abgespielt werden kann, wobei entsprechende Achswerte mitgeloggt werden können. Dies kann sowohl auf einem Simulationssystem als auch auf einem realen Roboter erfolgen

Anschließend kann die Bestimmung der sogenannten reflektierten Masse erfolgen, welche einen theoretischen Verlauf der reflektierten Masse über der Zeit liefert. Dies dient als Indikator für insbesondere große, auf den Leichtbauroboter 12, oder im Falle eines Stoßes mit dem Arbeiter 20 auf den Arbeiter 20 wirkende Massen.

Es werden kritische Bahnpunkte des Leichtbauroboters 12 ermittelt, insbesondere innerhalb des Arbeitsraums 22 des Arbeiters 20, an welchen eine vorbestimmte Bewegungsgeschwindigkeit durch den Leichtbauroboter 12 überschritten oder eine vorbestimmte Masse eines Mittels des Roboters 12 zu bewegenden Elements - vorliegend also beispielsweise das Werkzeug 16 inklusive dem Werkstück 14 - überschritten wird, wobei die zuvor ermittelten Achsbewegungsverläufe und der vorgegebene Arbeitsraum 22 dabei berücksichtigt werden. Zudem können unter Berücksichtigung der Achsbewegungsverläufe mögliche Quetsch- oder Klemmstellen, insbesondere innerhalb des Arbeitsraums 22 des Arbeiters 20, ermittelt werden, bei welchen jeweilige Mindestabstände zwischen der Arbeitsstation 10 und dem Leichtbauroboter 12 sowie dessen Werkzeug- oder die Werkstückgeometrien unterschritten werden.

Weiterhin können und sollten die für eine Kollision relevanten Werkzeug- und Werkstückgeometrien berücksichtigt werden, also beispielsweise scharfe Kanten und verrundete Ecken, sowie die möglicherweise vorhandenen bzw. verwendeten Kollisionserkennungs- und -vermeidungsstrategien.

Kritische Bahnpunkte werden als solche identifiziert und ausgewählt, wenn besonders große Geschwindigkeiten, große Massen und daraus resultierend große Impulse auftreten.

In die Berechnung der kritischen Bahnpunkte muss ebenfalls einfließen, welche Geometrien an Werkzeug oder Werkstück für eine Kollision relevant sind, ob es sich um Klemmen oder Stoßen handelt und welche Körperteile gefährdet sind.

Dabei können derartige Zonen ausgeblendet werden bzw. unberücksichtigt bleiben, welche nicht innerhalb des Arbeitsraums 22 des Arbeiters 20 liegen. In einer besonders exakten Ausführung kann die Bewegung des Roboters 12 in einzelne Punkte in Abständen von wenigen Millisekunden zerlegt werden. Im Anschluss kann dann jeder einzelne sich ergebende Punkt ausgewählt und entsprechend abgesichert werden.

In Fig. 4 sind der Leichbauroboter 12 sowie ein weiterer Industrieroboter 24 gezeigt. Der Industrieroboter 24 dient als flexible Kollisionsstation, mittels welchem beliebige Stoßfälle mit variablen Werkzeuglasten durchgeführt werden können. Mit anderen Worten wird also eine Versuchsanordnung aus dem Industrieroboter 24, ausgestattet mit einer Kraft-Messsensorik, mit dem Leichtbauroboter 12 verwendet. Der Industrieroboter 24 kann dabei flexibel im Raum verfahren und derart eingestellt werden, dass er jeweilige Stoßrichtungen und entsprechende Widerstände, für den Fall eines Stoßes genau nachbilden kann. Die hier gezeigte Anordnung ist physikalisch aufgebaut, kann aber prinzipiell in einen digitalen Prozess eingebunden werden.

Die oben beschriebene Nachbildung is abhängig von der Trajektorie, also der Bewegungsbahn des Roboters, den dabi gehandhabten Werkzeugen / Werkstücken, dem verwendeten Robotertyp sowie den verwendeten Kollisionserkennungs- und -vermeidungsstrategien.

Für die zuvor als kritisch ermittelten Bahnpunkte des Leichtbauroboters 12 oder, falls erforderlich, für alle Punkte der Bahn werden also mittels des Industrieroboters 24, welcher mit dem Leichtbauroboter 12 gekoppelt ist, jeweilige Kollisionen nachgebildet. Dabei werden für die entsprechenden Kollisionspunkte, welche den kritischen Bahnpunkten entsprechen, jeweilige Kollisionsvektoren bestimmt. Der Industrieroboter 24 verkörpert dabei einen Stoß des Leichtbauroboters 12 gegen eine Wand.

Bei dieser Nachbildung von Kollisionen kann der stoßende Roboter ausgetauscht werden, falls Untersuchungen für einen bestimmten Robotertypen, einen bestimmten Softwarestand oder für einen bestimmten Hardwarestand durchgeführt werden müssen.

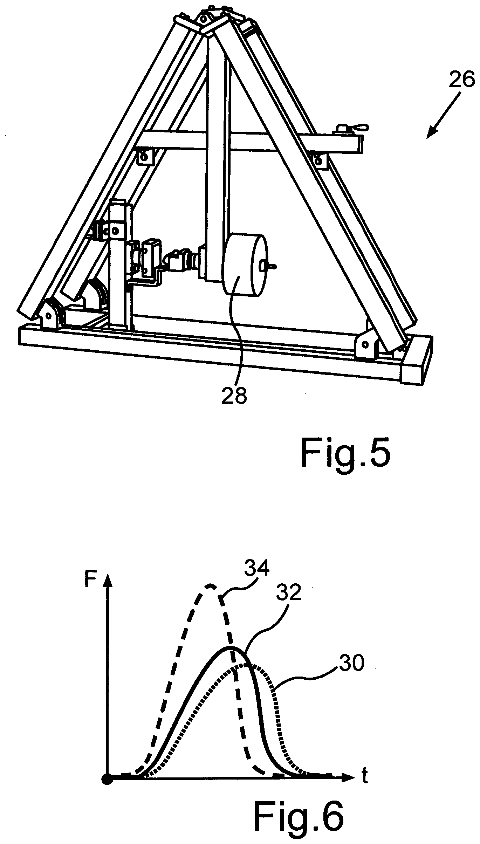

In Fig. 5 ist in einer Perspektivansicht ein Pendel 26, welches eine Messdose 28 aufweist, gezeigt. Nach der Durchführung jeweiliger Stöße mittels der in Fig. 4 gezeigten Versuchsanordnung, welche den Industrieroboter 24 und den Leichtbauroboter 12 umfasst, erfolgt eine Umrechnung jeweiliger Stöße von dem hier gezeigten Pendel 26 auf die Kraftmessdose 28. Die Masse des Pendels 26 ist dabei variabel, so dass die reale Werkzeugmasse exakt nachgebildet werden kann. Das Pendel kann dabei immer soweit ausgelenkt werden, dass dieses mit der gleichen Geschwindigkeit auf die Messdose 28 auftritt, wie dies zuvor mittels des Industrieroboters 24, wie in Fig. 4 gezeigt, simuliert worden ist.

Die mittels des Industrieroboters 24 nachgebildeten Kollisionen werden also mittels des Pendels 26 und der Kraftmessdose 28 mit unterschiedlichen Verfahrgeschwindigkeiten - also unterschiedlichen Auslenkungen des Pendels 26 - iterativ solange wiederholt, bis entsprechende Kollisionskräfte und Kollisionsdrücke sowie Flächenpressungen für die jeweils kritischen Bahnpunkte jeweilige Schwellenwerte unterschreiten.

In Fig. 6 sind in einem schematischen Diagramm unterschiedliche Kraft-Zeit-Verläufe aufgetragen. Ein beispielhafter Kraft-Zeit-Verlauf, welcher sich bei einem tatsächlichen Stoß des Leichtbauroboters 12 auf die Messdose 28 ergeben würde, ist mittels der Linie 30 gezeigt. Zudem sind weitere Kraft-Weg-Verläufe 32, 34 gezeigt, welche sich bei der Verwendung des Pendels 26 ergeben. Je nachdem, was für Zusammenstöße, beispielsweise mit unterschiedlichen Körperteilen des Arbeiters 20, nachgebildet werden, ergeben sich unterschiedliche biofidele Belastungsgrenzen. Die Auslenkung des Pendels 26 wird für die Nachbildung der jeweiligen Kollisionen der jeweils als kritisch eingestuften Bahnpunkte so oft iterativ wiederholt, bis jeweils vorgegebene biofidele Belastungsgrenzen unterschritten werden.

Im Endeffekt können also reale Kollisionskräfte sowie Kollisionsdrücke für jeweilige als kritisch eingestufte Bahnpunkte, oder in minimalen Abständen jeder Punkt auf der Bahn, des Leichtbauroboters 12 ermittelt werden. Des Weiteren werden jeweils zulässige Verfahrgeschwindigkeiten für die jeweils als kritisch eingestuften Bahnpunkte des Leichtbauroboters 12 ermittelt.

Diese werden bezogen auf alle relevanten Geometrien an Werkzeug und Werkstück (Ecken, Kanten usw.) ermittelt.

Für die jeweils kritischen Bahnpunkte liegen somit Informationen über jeweilige Geschwindigkeiten, Massen und daraus resultierende Impulse vor. Entsprechend können jeweils auftretende Kräfte und Flächenpressungen ausgewertet und dahingehend überprüft werden, ob aktuelle Normen erfüllt werden. Falls dies nicht der Fall sein sollte, können wiederum entsprechende Verfahrgeschwindigkeiten solange variiert werden, bis diese erfüllt werden. Ebenfalls könnten künftig eingeführte Schwellen (Schmerzschwellen, Verletzungsschwellen) berücksichtigt werden. Ebenso könnten in diesem Prozessschritt die Kollisionsstrategien, Parameter, Nullraum- Orientierungspositionen variiert und damit optimal eingestellt werden.

In vorteilhafter Auslegung können Stoßeffekte durch Einsatz geeigneter Prallelemente (Schaumstoffe, oder Ähnliches) nachgebildet und in der Folge kritische Bahnpunkte gepolstert und als Optimierungsempfehlung dokumentiert werden. Korrekturfunktionen für freier Stoß auf geklemmter Stoß (vgl. IFF-Studie, TS 15066) etc. können ebenfalls berücksichtigt werden.

Das oben beschriebene Ermitteln von kritischen Bahnpunkten setzt teilweise Expertenwissen voraus. Ist dies nicht vorhanden oder soll möglichst sicher vorgegangen werden, empfiehlt sich ein sequenzielles Prüfen einer Bahn, indem der Prozess in inkrementelle Teilpunkte zerlegt und jeder dieser Punkte geprüft wird.
Die Vorteile dieses Verfahrens liegen in einer durchgängigen Prüfung, die dann auch dokumentiert werden kann sowie einer hohen durchgängigen Transparenz. Auf der anderen Seite bedeutet sie keinen signifikanten Mehraufwand gegenüber der Prüfung nur der als kritisch angesehenen Bahnpunkte, da in der vollautomatisierten Auslegung kein Aufwand entsteht.

Für die oben beschriebene Methodik gibt es vielfältige Anwendungsmöglichkeiten: Einerseits kann sie in der Angebots- und Planungsphase einer Anlage zur Anwendung kommen, sie kann als Unterstützung für die Entwickler derartiger Anlagen dienen, zur Projektierung der Anlagen zu Hilfe genommen werden, beispielsweise um eine Taktzeitoptimierung zu einem frühen Zeitpunkt der Anlagenplanung durchzuführen.

Darüber hinaus kann die Methodik bei der Inbetriebnahme, der Abnahme und Freigabe sowie der CE-Prüfung einer Anlage verwendet werden. Falls Anpassungen und Optimierung an bestehenden Anlagen vorgenommen werden, können diese anschließend mit dem Verfahren wieder bewertet werden. Während der Betriebszeit einer Anlage können auf diese Weise Maßnahmen zur Instandhaltung, zur Korrektur und zur weiteren Prozessoptimierung durchgeführt werden. Bei Anlagenänderungen wie Erweiterungen aufgrund von neuen Varianten oder Baureihen sowie neuen Technologien, Werkstoffen, Werkzeugen oder ähnlichem kann die beschriebene Methodik vorteilhaft verwendet werden.

Weiterhin kann sie dann zum Einsatz kommen, wenn sich die normativen Randbedingungen ändern, also beispielsweise die zulässigen Kollisionskräfte oder - drücke oder Körpermodelle sich ändern.

## Patentansprüche

1. Verfahren zum Ermitteln von die Bewegung eines Roboters (12) beeinflussenden Größen, mit den Schritten:
a) Bereitstellen einer vom Roboter (12) und einem Arbeiter (20) durchzuführen Arbeitsaufgabe;
b) Bereitstellen eines Layouts einer Arbeitsstation (10), in welcher die Arbeitsaufgabe durchzuführen ist;
c) Bereitstellen von Werkzeugdaten, welche ein bei der Durchführung der Arbeitsaufgabe durch den Roboter (12) zu verwendendes Werkzeug (16) charakterisieren;
d) Ermitteln jeweiliger Achsbewegungsverläufe des Roboters (12), welche zum Durchführen der Arbeitsaufgabe erforderlich sind, unter Berücksichtigung der in den vorhergehenden Schritten bereitgestellten Informationen;
e) Bereitstellen eines Arbeitsraums (22) des Arbeiters (20);
f) Ermitteln relevanter kritischer Bahnpunkte des Roboters (12)innerhalb des Arbeitsraums (22) des Arbeiters (20), an welchen eine vorbestimmte Bewegungsgeschwindigkeit durch den Roboter (12) überschritten und/oder eine vorbestimmte Masse eines mittels des Roboters (12) zu bewegenden Elements überschritten wird, unter Berücksichtigung der Achsbewegungsverläufe und des Arbeitsraums (22);
g) Nachbilden jeweiliger Kollisionen mittels eines zweiten Roboters (24) an den relevanten Bahnpunkten, indem eine Ermittlung der im Betrieb real auftretenden Kollisionskräfte und Flächenpressungen mit Hilfe eines Versuchsaufbaus bestehend aus dem zweiten Roboter (24), der einen starren Stoß in jeder beliebigen Position des Arbeitsraums (22) nachbildet, durchgeführt wird;
h) Bestimmen zulässiger Verfahrgeschwindigkeiten des Roboters (12) für jeden kritischen Bahnpunkt unter Berücksichtigung der nachgebildeten Kollisionen.

2. Verfahren nach Anspruch 1,
**dadurch gekennzeichnet, dass**
unter Berücksichtigung der Werkzeugdaten ein Hüllraum (18) festgelegt wird, welcher das Werkzeug (18) umgibt.

3. Verfahren nach Anspruch 1 oder 2,
**dadurch gekennzeichnet, dass**
die Achsbewegungsverläufe mittels einer Simulation oder einer Messung ermittelt werden.

4. Verfahren nach einem der vorhergehenden Ansprüche,
**dadurch gekennzeichnet, dass**
unter Berücksichtigung der Achsbewegungsverläufe mögliche Quetsch- oder Klemmstellen, insbesondere innerhalb des Arbeitsraums (22) des Arbeiters (20), ermittelt werden, bei welchen jeweilige Mindestabstände zwischen einer Arbeitsstation (10) und Roboter (12) unterschritten werden.

5. Verfahren nach einem der vorhergehenden Ansprüche,
**dadurch gekennzeichnet, dass**
ein zeitlicher Verlauf der reflektierten Massen des Roboters (12) aus realen Roboterstößen bestimmt wird.

6. Verfahren nach einem der vorhergehenden Ansprüche,
**dadurch gekennzeichnet, dass**
die mittels des zweiten Roboters (24) nachgebildeten Kollisionen mittels eines Pendels (26) und einer Kraftmessdose (28) mit unterschiedlichen Verfahrgeschwindigkeiten iterativ wiederholt werden, bis entsprechende Kollisionskräfte und Kollisionsdrücke sowie Flächenpressungen für die Bahnpunkte jeweilige Schwellwerte unterschreiten.

7. Verfahren nach einem der vorhergehenden Ansprüche,
**dadurch gekennzeichnet, dass**
beim Ermitteln der jeweiligen Kollisionen der zweite Roboter (24) derart eingestellt wird, dass dieser entsprechende Stoßrichtungen und Widerstände für die kritischen Bahnpunkte nachbildet.

8. Verfahren nach einem der vorhergehenden Ansprüche,
**dadurch gekennzeichnet, dass**
beim Ermitteln der jeweiligen Kollisionen der zweite Roboter (24) mit einem Kraftmesssystem ausgestattet ist.

9. Verfahren nach einem der vorhergehenden Ansprüche,
**dadurch gekennzeichnet**
**dass** der Messaufbau auch den Anforderungen eines biofidelen Prüfkörpers genügen kann.

10. Verfahren nach einem der vorhergehenden Ansprüche,
**dadurch gekennzeichnet,**
**dass** in einem automatischen iterativen Prozess die Parameter, insbesondere Stoßgeschwindigkeiten, Stoßmasse und/oder Kontaktgeometrie des Roboters (12) solange verändert werden, bis vorgegebene Grenzwerte über- oder unterschritten werden.

## Claims

1. Method for determining variables influencing the movement of a robot (12), the method comprising the following steps:
a) the provision of a work task to be performed by the robot (12) and by an operator (20);
b) the provision of a layout of a workstation (10) where the work task is to be performed;
c) the provision of tool data characterising a tool (16) to be used by the robot (12) in performing the work task;
d) the determination of respective axial movement sequences of the robot (12) which are required for performing the work task, taking account of the information provided in the preceding steps;
e) the provision of a working space (22) of the operator (20);
f) the determination of relevant critical track points of the robot (12) within the working space (22) of the operator (20), where a predetermined speed of movement is exceeded by the robot (12) and/or a predetermined mass of an element to be moved by means of the robot (12) is exceeded, taking account of the axial movement sequences and of the working space (22);
g) the emulation of respective collisions by means of a second robot (24) at the relevant track points by carrying out a determination of the collision forces and contact pressures that physically occur in operation with the aid of a test set-up consisting of the second robot (24), which emulates a rigid impact at any position of the working space (22);
h) the determination of permissible traversing speeds of the robot (12) for each critical track point, taking account of the emulated collisions.

2. Method according to claim 1,
**characterised in that**
an envelope space (18) surrounding the tool (16) is determined, taking account of the tool data.

3. Method according to claim 1 or 2,
**characterised in that**
the axial movement sequences are determined by means of a simulation or a measurement.

4. Method according to any of the preceding claims,
**characterised in that**
potential pinch or clamping point where respective minimum distances between a workstation (10) and the robot (12) are undershot are determined, in particular within the working space (22) of the operator (20), taking account of the axial movement sequences.

5. Method according to any of the preceding claims,
**characterised in that**
a chronological sequence of the reflected masses of the robot (12) is determined from real robot impacts.

6. Method according to any of the preceding claims,
**characterised in that**
the collisions emulated by the second robot (24) are iteratively repeated by means of a pendulum (26) and a load cell (28) at various traversing speeds until corresponding collision forces and collision pressures as well a contact pressures for the track points undershoot respective threshold values.

7. Method according to any of the preceding claims,
**characterised in that**
when determining the respective collisions, the second robot (24) is adjusted such that it emulates appropriate impact directions and resistances for the critical track points.

8. Method according to any of the preceding claims,
**characterised in that**
when determining the respective collisions, the second robot (24) is equipped with a force measuring system.

9. Method according to any of the preceding claims,
**characterised in that**
the measuring set-up can meet the requirements of a biofidel test body as well.

10. Method according to any of the preceding claims,
**characterised in that**
in an automatic iterative process, the parameters, in particular impact speed, impact mass and/or contact geometry of the robot (12), are changed until predetermined limit values are exceeded or undershot.

## Revendications

1. Procédé de détermination des dimensions influençant le mouvement d'un robot (12), comprenant les étapes consistant à :
a) obtenir une tâche à effectuer par le robot (12) et par un opérateur (20) ;
b) obtenir une disposition d'un poste de travail (10), où la tâche doit être effectuée ;
c) obtenir les données d'outil, qui caractérisent un outil (16) utilisé par le robot (12) pendant l'exécution de la tâche ;
d) déterminer chacun des tracés de mouvement d'axe du robot (12) nécessaires à l'exécution de la tâche, en tenant compte des informations obtenues aux étapes précédentes ;
e) obtenir un espace de travail (22) de l'opérateur (20) ;
f) déterminer des points de parcours critiques pertinents du robot (12) à l'intérieur de l'espace de travail (22) de l'opérateur (20), au niveau desquels une vitesse de déplacement prédéfinie est dépassée par le robot (12) et/ou une masse prédéfinie d'un élément devant être déplacé par le robot (12) est dépassée, en tenant compte des parcours de mouvement d'axe et de l'espace de travail (22) ;
g) reconstituer chacune des collisions au moyen d'un second robot (24) au niveau des points de parcours pertinents par détermination des forces de collision se produisant réellement lors du fonctionnement et des pressions de surface à l'aide d'un montage d'essai constitué du second robot (24) qui reconstitue un choc dans n'importe quelle position de l'espace de travail (22) ;
h) définir des vitesses de déplacement admissibles du robot (12) pour chaque point de parcours critique en tenant compte des collisions reconstituées.

2. Procédé selon la revendication 1, **caractérisé en ce qu'**en tenant compte des données d'outil il est déterminé un espace d'enveloppe (18), qui entoure l'outil (18).

3. Procédé selon la revendication 1 ou la revendication 2, **caractérisé en ce que** les parcours de mouvement d'axe sont déterminés au moyen d'une simulation ou d'une mesure.

4. Procédé selon l'une quelconque des revendications précédentes, **caractérisé en ce qu'**en tenant compte des parcours de mouvement d'axe, de possibles points de pincement ou de blocage, en particulier dans l'espace de travail (22) de l'opérateur (20), peuvent être déterminés, au niveau desquels des distances minimales entre une station de travail (10) et le robot (12) peuvent être dépassées vers le bas.

5. Procédé selon l'une quelconque des revendications précédentes, **caractérisé en ce qu'**une évolution temporelle des masses réfléchies du robot (12) est déterminée à partir des chocs réels du robot.

6. Procédé selon l'une quelconque des revendications précédentes, **caractérisé en ce que** les collisions reconstituées au moyen du second robot (24) sont répétées itérativement au moyen d'un pendule (26) et d'un dynamomètre (28) à différentes vitesses de déplacement, jusqu'à ce que les forces de collision et les pressions de collision ainsi que les pressions de surface pour les points de parcours dépassent vers le bas chaque valeur seuil.

7. Procédé selon l'une quelconque des revendications précédentes, **caractérisé en ce que** lors de la détermination de chaque collision, le second robot (24) est réglé de manière à ce qu'il reconstitue ces directions de choc correspondantes et les résistances pour les points de parcours critiques.

8. Procédé selon l'une quelconque des revendications précédentes, **caractérisé en ce que** lors de la détermination de chaque collision, le second robot (24) est équipé d'un système de mesure de force.

9. Procédé selon l'une quelconque des revendications précédentes, **caractérisé en ce que** l'installation de mesure répond également aux exigences d'un corps de vérification biofidèle.

10. Procédé selon l'une quelconque des revendications précédentes, **caractérisé en ce que** dans un processus itératif automatique, les paramètres, en particulier les vitesses de collision, la masse de collision et/ou la géométrie de contact du robot (12) sont modifiées à mesure que les valeurs limites prédéfinies sont dépassées vers le haut ou vers le bas.
